# EUROPEAN PATENT SPECIFICATION

(11) **EP 1 733 403 B1**
(45) Date of publication and mention of the grant of the patent: **27.01.2010**
(21) Application number: 04718459.3
(22) Date of filing: 08.03.2004
(51) Int. Cl.: H01G 9/04, C25F 3/04, H01G 9/00

(54) **METHOD FOR PRODUCTION OF HIGH CAPACITANCE ELECTROLYTIC CAPACITOR FOIL**
VERFAHREN ZUR HERSTELLUNG EINER FOLIE FÜR ELEKTROLYTISCHEN KONDENSATOR HOHER KAPAZITÄT
PROCEDE DE FABRICATION DE FEUILLE DE CONDENSATEUR ELECTROLYTIQUE HAUTE CAPACITE

(43) Date of publication of application: 20.12.2006
(73) Proprietor: VISHAY BCCOMPONENTS B.V., 5652 AH Eindhoven (NL)
(72) Inventor: POST, Hendrik, Arien, NL-8022 AW Zwolle (NL); REKERS, Alexander, Gerard, Daniel, NL-8022 AW Zwolle (NL)
(74) Representative: van Westenbrugge, Andries
(86) International application number: PCT/NL2004/000171
(87) International publication number: WO 2005/086192

(56) References cited:
- EP-A- 0 054 990
- US-A- 3 779 877
- US-A- 4 213 835
- US-A- 4 518 471
- PATENT ABSTRACTS OF JAPAN vol. 014, no. 236 (C-0720), 18 May 1990 (1990-05-18) -& JP 02 061041 A (MATSUSHITA ELECTRIC IND CO LTD), 1 March 1990 (1990-03-01)
- PATENT ABSTRACTS OF JAPAN vol. 006, no. 227 (C-134), 12 November 1982 (1982-11-12) -& JP 57 131399 A (SHIYOUWA ARUMINIUMU KK), 14 August 1982 (1982-08-14)

## Description

### Field of the invention

The present invention relates to a method for producing a capacitor foil having a core layer, at least one porous layer and a porous surface layer, the at least one porous layer and the porous surface layer being porous as a result of a first DC-pulse etching process step. More in particular, the present invention relates to a method as defined in the preamble of claim 1. The invention is particularly suitable for a low voltage electrolytic capacitor anode foil, e.g. made from aluminum.

### Prior art

Such an aluminum foil and method for producing aluminum foil for capacitors is known from European patent application EP-A-0 054 990. This publication describes the process for obtaining high capacity aluminum foil using a DC-pulse etching process, in which the aluminum foil is subjected to DC-pulses in an etching fluid, such that on both surfaces of the aluminum foil, a layer exists in which pores or irregularly formed channels are present, thereby increasing the capacitance per unit of square surface of the foil. However, the aluminum foil manufactured using this technique is more brittle than non-treated aluminum foil. The brittleness of the foil can lead to problems when manufacturing (electrolytic) capacitors from this foil, because of the bending of the foil involved.

Japanese patent application JP-A-57 131399 discloses a method for manufacturing aluminum alloy foil van an electrolytic capacitor. The abstract describes a two stage DC etching process: first step at 5-40 A/dm² with 1-35% hydrochloric acid or sulfuric acid (which forms a porous oxide film) and a second step at 0.5-7 A/dm² with 0.03-3% hydrochloric acid or oxalic acid.

### Summary of the invention

The present invention seeks to provide a method for producing an aluminum foil which can be used for producing low voltage (electrolytic) capacitors having a high capacitance and an improved bending resistance (or bending strength). Bending strength is a parameter which may be measured e.g. using the standard EIAJ RC-2364A (1999).

According to the present invention, a method for producing a capacitor foil is provided according to the preamble defined above, comprising the features as defined in the characterizing part.

By filling the porous layer of the (e.g. aluminum) foil after the first etching step by means of modifying or replacing the etching fluid, it is possible to use a further etching step to re-etch the foil such that mainly the porous surface layer is etched and thus producing a porous surface layer with a higher porosity and a modified morphology. This enables to produce a foil having an improved bending strength.

In a first embodiment of the present method, the filling substance is water. This is an easy available substance with low etching capability which allows easy handling. The water may even be fixed in the porous layer by freezing, the further etching being executed at a temperature below zero °C. Next, the foil is rinsed to eliminate the etching fluid. The foil is further cleaned at a temperature above zero °C.

Alternatively, the filling substance is ethylene glycol. This fluid is also easily available, and its handling is well known. The further etching is then e.g. performed with a NaCl or HCl etching bath. Mixtures of other substances may also be used as filling substances.

According to the present method, it is also possible to repeat a number of etching steps in order to obtain the best result.

### Short description of drawings

The present invention will be discussed in more detail below, using a number of exemplary embodiments, with reference to the attached drawings, in which
Fig. 1 shows a sectional picture of a known high capacitance aluminum foil for an electrolytic capacitor;
Fig. 2 shows a simplified scheme of a processing system for a foil according to an embodiment of the present invention; and
Fig. 3a shows a sectional view of a high capacitance aluminum foil manufactured with a one step DC-pulse etching process; Fig. 3b shows a sectional view of an embodiment of a foil manufactured according to the present invention; and Fig. 3c shows a sectional view of a further embodiment of a foil.

### Detailed description of exemplary embodiments

In the production of low voltage electrolytic capacitors, aluminum foil is used to form a.o. the anode of the electrolytic capacitor. This aluminum foil is preprocessed in order to obtain as large a capacity per unit of square surface of the aluminum foil as possible, in order to be able to minimize the dimensions of the capacitor. However, the process used to enlarge the capacitance of the foil, also enlarges the brittleness of the foil. This means the foil will break more easily when bent, and leads to problems in manufacturing low voltage electrolytic capacitors.

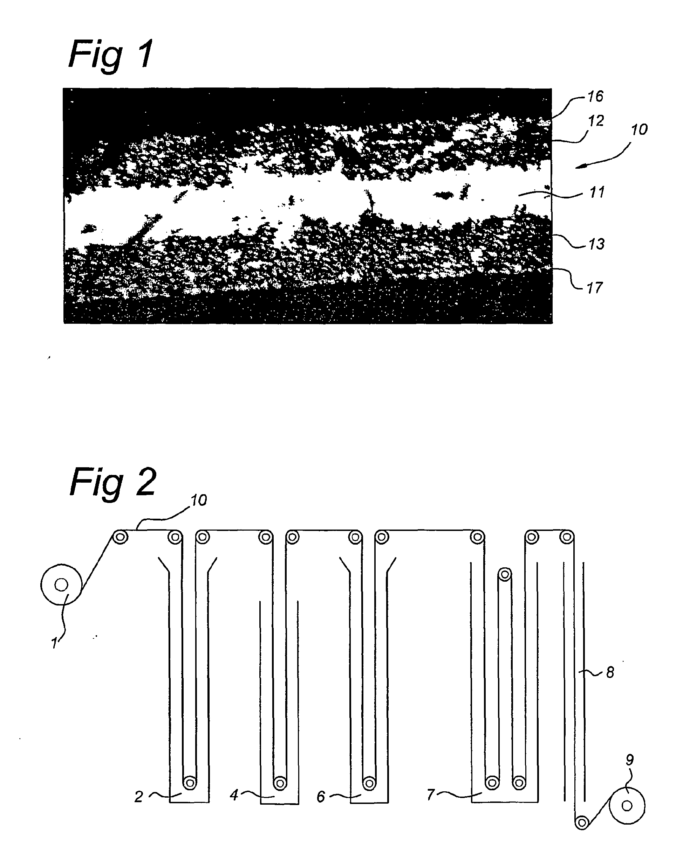

Fig. 1 shows a cross sectional picture of an aluminum foil 10 after being etched by a DC-pulse etching process. The aluminum foil 10 comprises a core layer 11, in which substantially no aluminum material has been etched away. In the upper layer 12

As an alternative, the still present etching fluid of the first stage 2 can be modified into or replaced by a substance or fluid having a low etching capability, effectively stopping the etching process.

By filling the layers 12, 13, the aluminum foil 10 is etched in a second etching step using a second etch container 6, but substantially only in an outer layer of the aluminum foil 10. This allows to change the morphoLogy of the etched aluminum foil 10, especially in the surface layers 16, 17 and material directly below the surface, resulting in a much better resistance against bending. After the second etching step, the aluminum foil 10 is further cleaned by rinsing (using rinse container 7), to remove the etching fluid and the (low etching capability) filling substance. After that, the aluminum foil 10 is dried in a drying stage 8 before being wound on a transport roll 9 for further processing.

The pores in the aluminum foil 10, which are present after the first etching step, can e.g. be filled with water as filling substance. When the foil with water is cooled below zero degrees C, the filling substance is fixed within the aluminum foil 10. Next, the aluminum foil 10 is being etched in the second DC-pulse etching step, at suitable etching conditions below zero degrees C. In the following rinsing process, the aluminum foil 10 is rinsed as usual at temperatures above zero degrees C.

In an alternative embodiment, the filling substance is ethylene glycol. The second etching step then includes DC-pulse etching the foil 10 with a NaCl or HCl etching bath at a suitable temperature. After that, the ethylene glycol is eliminated, and consecutively, the aluminum foil 10 is rinsed and dried as usual.

The aluminum foil 10 obtained by the present method, has a much better breaking and bending resistance than the aluminum foil 10 processed in the conventional one-step DC-pulse process. This eliminates the problems encountered in the further processing of the aluminum foil 10, such as brittleness, tearing in the production machinery (etching equipment, forming equipment, as well as winding equipment, cold-welding, stitching and flattening equipment for making aluminum electrolytic capacitors). It is thus possible to obtain a wider range of electrolytic capacitor values in the production process.

In further alternative embodiments, an even larger number of etching steps are performed, with intermediate rinsing and filling steps, which allows to accurately form the structure of the aluminum foil 10. By choosing proper parameters, including but not limited to, etch parameters (etching fluid and etching conditions parameters) and DC-pulse parameters (amount of current/etching charge, pulse shape, etc.), the characteristics of the resulting aluminum foil 10 (capacitance, bending strength, etc.) may be influenced.

It has been tested that an aluminum foil 10 for forming an anode of an electrolytic capacitor which has been manufactured using the multi-step method described above, is much more resistant against bending and breaking than aluminum foil which is manufactured in the one-step conventional manner.

For example, an aluminum foil 10 which has been processed using a single step processing with an etching charge of 80 C/cm², results in a processed foil with a specific capacity of 21.2 µF/cm². An aluminum foil which has been processed using the present invention in two DC-pulse etching steps (with an etching charge of 60 C/cm² during the first etching step, and an etching charge of 40 C/cm² during the second etching step), resulted in a processed foil with a specific capacitance of 20.7µF/cm². The specific capacitance is thus almost equal, but the two-step foil is able to withstand 49 bendings, against 23 bendings for the one-step foil. The bending strength is expressed in the number of bendings before the foil breaks (see industrial standard EIAJ RC-2364A (1999). Other tests have been performed using different etching charges where the multi-step foil showed a better bending strength than the conventional single step foil having a comparable specific capacitance.

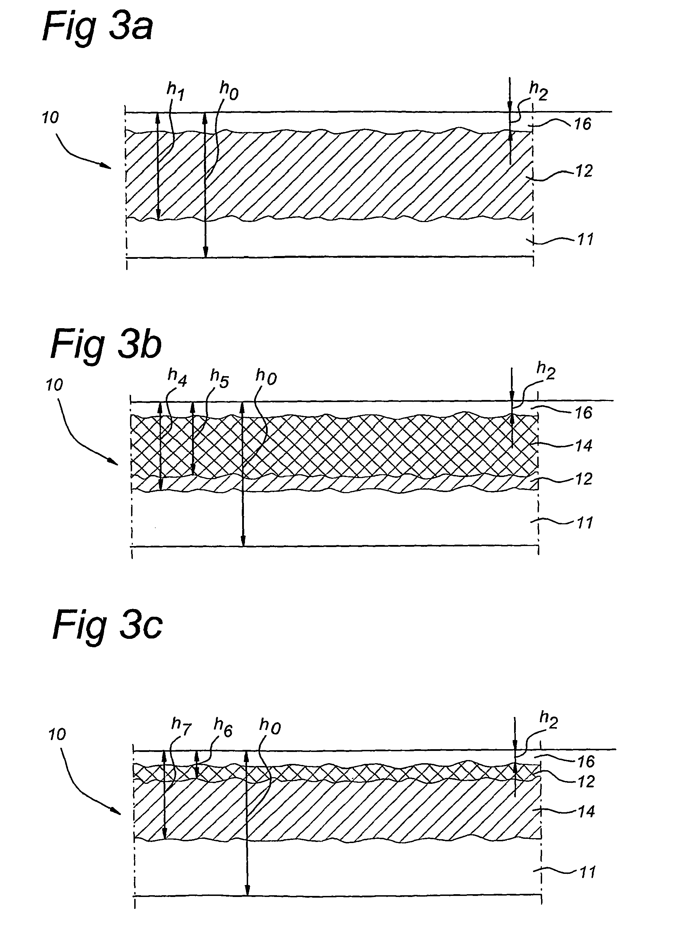

The above examples are illustrated in the sectional views of Fig. 3a and 3b. In Fig. 3a, a partial sectional view is shown of an aluminum foil 10 which is manufactured using a conventional one step DC-pulse etching process. The figures show only one side of the foil 10, and the thickness of (half of) the foil is indicated by h₀. To obtain the required specific capacity, the foil 10 is etched using an etching charge of 80 C/cm², which results in a first porous layer 12 having a thickness of h₁ and a surface layer 16 with a thickness of substantially h₂. The surface layer 16 is generally less porous than the first porous layer 12, and is believed to cause the problems of brittleness.

In Fig. 3b, the equivalent foil 10 is shown, which has been subjected to two etching steps. The first porous layer 12, which is formed in the first etching step using an etching charge of 60 C/cm², has a thickness of h₄, which is smaller than the thickness h₁. A second porous layer 14 is formed during the second etching step with an etching charge of 40 C/cm², and has a thickness of h₅ (again smaller than h₄). The porosity of the second porous layer 14 is higher than the porosity of the first porous layer 12, but more important, the structure of the surface layer 16 is being changed by the second etching step. Although the thickness h₂ of the surface layer 16 will not be changed much by the second etching step, the structure is made more open, having more pores which actually extend through the surface layer 16. As a result, the foil 10 has a much higher resistance against bending, as discussed above.

A different situation may arise when the first etching step is performed with a relatively low etching charge (e.g. 10 C/cm²), resulting in a first porous layer 12 with a depth of h₆, followed by a second etching step with a relatively high etching charge (e.g. 80 C/cm²). The second etching step will result in a second porous layer 14 with a depth of h₇ (h₇>h₆), but also, the porosity and morphology of the first porous layer 12 and the surface layer 16 will be changed. The resulting foil is shown in the partial sectional view of Fig. 3c.

In an alternative embodiment, the parameters of the two step etching process are chosen such that only the surface layers 16, 17 are subjected to etching fluid in the second etching step. The morphology of the surface layers 16, 17 is then modified, but no second porous layer 14 is formed.

Although in the above description, aluminum is mentioned as an exemplary embodiment of the foil material, other materials may be used in the present invention.

## Claims

1. Method for producing a capacitor foil (10) having a core layer (11), at least one porous layer (12; 13) and a porous surface layer (16; 17), the at least one porous layer (12; 13) and the porous surface layer (16; 17) being porous as a result of a first DC-pulse etching process step, the method comprising
at least one further etching step comprising further etching at least the porous surface layer (16; 17) of the foil (10) to increase the porosity of the porous surface laver (16; 17); **characterized in that** the method further comprises:
- modifying or replacing the etching fluid of the first etching process step in the at least one porous layer (12; 13) and the porous surface layer (16; 17) into or by a filling substance having a low etching capability, effectively stopping the etching process before the at least one further etching step;
and
- removing the filling substance from the foil (10) after the at least one further etching step.

2. Method according to claim 1, in which the filling substance is water.

3. Method according to claim 2, in which the water is fixed in the porous layer (12; 13) by freezing, the further etching is executed at a temperature below zero °C, the foil (10) is rinsed to eliminate the etching fluid, and the foil (10) is further cleaned at a temperature above zero °C.

4. Method according to claim 1, in which the filling substance is ethylene glycol.

5. Method according to one of the claims 2-4, in which the further etching is performed with a NaCl or HCl etching bath.

## Patentansprüche

1. Verfahren zum Herstellen einer Kondensatorfolie (10) mit einer Kernschicht (11), zumindest einer porösen Schicht (12; 13) und einer porösen Oberflächenschicht (16; 17), wobei die zumindest eine poröse Schicht (12; 13) und die poröse Oberflächenschicht (16; 17) als Resultat eines ersten Gleichstrompuls-Ätzprozessschritts porös ist, wobei das Verfahren zumindest einen weiteren Ätzschritt umfasst, welcher umfasst:
Ätzen zumindest der porösen Oberflächenschicht (16; 17) der Folie (10), um die Porosität der porösen Oberflächenschicht (16; 17) zu erhöhen, **dadurch gekennzeichnet, dass** das Verfahren ferner umfasst:
Modifizieren oder Ersetzen der Ätzflüssigkeit des ersten Ätzverarbeitungsschritts in der zumindest einen porösen Schicht (12; 13) und der porösen Oberflächenschicht (16; 17) mittels einer oder durch eine Füllsubstanz, die eine geringere Ätzfähigkeit aufweist, wodurch der Ätzprozess effektiv vor dem zumindest einen weiteren Ätzschritt beendet wird; und
Entfernen der Füllsubstanz aus der Folie (10) nach dem zumindest einen weiteren Ätzschritt.

2. Verfahren nach Anspruch 1, wobei die Füllsubstanz Wasser ist.

3. Verfahren nach Anspruch 2, wobei das Wasser in der porösen Schicht (12; 13) durch Gefrieren fixiert wird, wobei das weitere Ätzen ausgeführt wird bei einer Temperatur unterhalb von 0 °C, wobei die Folie (10) gespült wird, um die Ätzflüssigkeit zu eliminieren, und die Folie (10) weitergehend gesäubert wird bei einer Temperatur von über 0 °C.

4. Verfahren nach Anspruch 1, wobei die Füllsubstanz Ethylenglykol ist.

5. Verfahren nach einem der Ansprüche 2-4, wobei das weitere Ätzen durchgeführt wird mit einem NaCl- oder HCl-Ätzbad.

## Revendications

1. Procédé de production d'une feuille (10) de condensateur possédant une couche de coeur (11), au moins une couche poreuse (12 ; 13) et une couche poreuse de surface (16 ; 17), la au moins une couche poreuse (12 ; 13) et la couche poreuse de surface (16 ; 17) étant poreuses à la suite d'une première étape de procédé de gravure par impulsions de courant continu, le procédé comprenant au moins une étape de gravure supplémentaire comprenant une gravure supplémentaire d'au moins la couche poreuse de surface (16 ; 17) de la feuille (10) pour augmenter la porosité de la couche poreuse de surface (16 ; 17) ; **caractérisé en ce que** le procédé comprend en outre :
- la modification ou le remplacement du fluide de gravure de la première étape de procédé de gravure dans la au moins une couche poreuse (12 ; 13) et la couche poreuse de surface (16 ; 17) en ou par une substance de remplissage ayant une faible capacité de gravure, pour arrêter efficacement le procédé de gravure avant la au moins une étape de gravure supplémentaire ; et
- l'élimination de la substance de remplissage de la feuille (10) après la au moins une étape de gravure supplémentaire.

2. Procédé selon la revendication 1, dans lequel la substance de remplissage est l'eau.

3. Procédé selon la revendication 2, dans lequel l'eau est fixée dans la couche poreuse (12 ; 13) par congélation, la gravure supplémentaire est exécutée à une température inférieure à 0 °C, la feuille (10) est rincée pour éliminer le fluide de gravure, et la feuille (10) est encore nettoyée à une température supérieure à 0 °C.

4. Procédé selon la revendication 1, dans lequel la substance de remplissage est l'éthylène glycol.

5. Procédé selon l'une quelconque des revendications 2 à 4, dans lequel la gravure supplémentaire est exécutée avec un bain de gravure contenant du NaCl ou du HCl.
